# EUROPÄISCHE PATENTSCHRIFT

(11) **EP 1 725 437 B1**
(45) Veröffentlichungstag und Bekanntmachung des Hinweises auf die Patenterteilung: **13.06.2007**
(21) Anmeldenummer: 05775006.9
(22) Anmeldetag: 22.07.2005
(51) Int. Cl.: B60R 25/02

(54) **VORRICHTUNG ZUM SPERREN DER LENKSPINDEL EINES KRAFTFAHRZEUGS**
DEVICE FOR BLOCKING THE STEERING SHAFT OF A MOTOR VEHICLE
DISPOSITIF POUR EMPECHER LA ROTATION DE L'ARBRE DE DIRECTION D'UN VEHICULE AUTOMOBILE

(30) Priorität: 10.09.2004 DE 102004043898
(43) Veröffentlichungstag der Anmeldung: 29.11.2006
(73) Patentinhaber: Huf Hülsbeck & Fürst GmbH & Co. KG, 42551 Velbert (DE)
(72) Erfinder: PIERONCZYK, Martin, 85221 Dachau (DE); TRISCHBERGER, Werner, 85229 Langenpettenbach (DE)
(74) Vertreter: Oedekoven, Wolf Dieter
(86) Internationale Anmeldenummer: PCT/EP2005/008021
(87) Internationale Veröffentlichungsnummer: WO 2006/027048

(56) Entgegenhaltungen:
- EP-A- 1 110 828
- EP-A- 1 236 626

## Beschreibung

Die Erfindung bezieht sich auf eine Vorrichtung zum Sperren der Lenkspindel eines Kraftfahrzeuges gegen Drehen mittels eines in einem Gehäuse über ein hin- und herdrehbares Steuerglied zwischen einer Sperrstellung und einer Freigabestellung axial hin- und herbewegbaren Sperrbolzens, welcher aus einem Sperrteil und einem Betätigungsteil besteht, wobei das Steuerglied das Betätigungsteil umschließt und zwei schraubenlinienförmig verlaufende innere Nuten sowie eine an die Nuten anschließende, ebene und zur Drehachse des Steuergliedes senkrechte Endfläche aufweist, womit ein in einer Querbohrung des Betätigungsteils axial verschieblicher Querstift zusammenwirkt, und wobei das Sperrteil entgegen der Wirkung einer Schraubendruckfeder in das Betätigungsteil einschiebbar ist.

Eine solche Vorrichtung ist bekannt (DE 100 30 688 C1). Dabei wirken das Betätigungsteil des Sperrbolzens und das Steuerglied derart zusammen, daß das Betätigungsteil beim Drehen des Steuergliedes in derjenigen Richtung, in welcher die beiden aus der Querbohrung des Betätigungsteils vorstehenden Enden des Querstiftes in den Nuten des Steuergliedes zu dessen durch eine vom Boden einer Nut außen im Abstand an der anderen Nut vorbei zum Betätigungsteil hin verlaufende Seitenflanke begrenzte Endfläche hinlaufen, entsprechend axial verschoben wird, um dann, wenn die Enden des Querstiftes von den Nuten auf die Endfläche übergehen, stillzustehen und in der erreichten Axialstellung zu bleiben, bis das Steuerglied in der entgegengesetzten Richtung gedreht wird und die Enden des Querstiftes in den Nuten von der Endfläche weg laufen, so daß das Betätigungsteil sich in der entgegengesetzten Richtung axial verschiebt. Die Enden des Querstiftes werden durch eine zwischen dem dem Sperrteil des Sperrbolzens abgewandten Ende des Betätigungsteils und dem Verschlußdeckel einer Montageöffnung des Gehäuses der Vorrichtung vorgesehene Scheiben- oder Schraubenfeder gegen die Endfläche gedrückt, um beim Drehen des Steuergliedes in der besagten entgegengesetzten Richtung ohne weiteres in die Nuten einzutreten.

Der Erfindung liegt die Aufgabe zugrunde, die bekannte Vorrichtung weiter zu verbessern und insbesondere die Anzahl der Federn zu verringern sowie die Montage zu vereinfachen.

Diese Aufgabe ist erfindungsgemäß durch die im kennzeichnenden Teil des Patentanspruchs 1 aufgeführten Merkmale gelöst. Vorteilhafte Ausgestaltungen der Vorrichtung nach der Erfindung sind in den restlichen Patentansprüchen angegeben.

Die Erfindung erzielt insbesondere den Vorteil, daß die Schraubendruckfeder, welche das Sperrteil und das Betätigungsteil des Sperrbolzens auseinanderdrückt, zusätzlich dazu dient, den Querstift des Betätigungsteils in der Freigabestellung des Sperrbolzens gegen die Endfläche des Steuergliedes zu drücken und für die Einführung des Querstiftes in die inneren Nuten des Steuergliedes zu sorgen, so daß eine gesonderte Feder zu diesem Zweck nicht erforderlich ist, was auch einer einfacheren Montage des Sperrbolzens im zugehörigen Gehäuse zugute kommt.

Nachstehend ist eine Ausführungsform der erfindungsgemäßen Vorrichtung anhand von Zeichnungen beispielsweise beschrieben. Darin zeigt:
Fig. 1 die Draufsicht in Richtung des Pfeils I in Fig. 2, wobei der Verschlußdeckel von der Montageöffnung des Gehäuses abgenommen ist und der Sperrbolzen sich in der Sperrstellung befindet;
Fig. 2 den Längsschnitt entlang der Linie II - II in Fig. 1, wobei auch die zugehörige Kraftfahrzeug-Lenkspindel und deren Mantelrohr dargestellt sind;
Fig. 3 den Längsschnitt entlang der Linie III - III in Fig. 1;
Fig. 4 die Draufsicht gemäß Fig. 1, wobei der Sperrbolzen sich in der Freigabestellung befindet;
Fig. 5 den Längsschnitt entlang der Linie V - V in Fig. 4, wobei auch die zugehörige Kraftfahrzeug-Lenkspindel und deren Mantelrohr dargestellt sind;
Fig. 6 den Längsschnitt entlang der Linie VI - VI in Fig. 4;
Fig. 7 den Längsschnitt gemäß Fig. 2 und 5, wobei der Sperrbolzen eine Zwischenstellung einnimmt;
Fig. 8 den Längsschnitt gemäß Fig. 3 und 6 in größerem Maßstab und ohne Gehäuse sowie ohne Steuerglied, wobei der Sperrbolzen die Zwischenstellung nach Fig. 7 einnimmt.

Die dargestellte Vorrichtung zum Sperren der Lenkspindel 1 eines Kraftfahrzeugs gegen Drehen weist einen Sperrbolzen 2 auf, welcher mit einer auf der Lenkspindel 1 befestigten Sperrhülse 3 mit Sperrnuten 4 zusammenwirkt. Die Lenkspindel 1 und die Sperrhülse 3 sind von einem Mantelrohr 5 umschlossen.

Der Sperrbolzen 2 besteht aus einem Sperrteil 6 und einem Betätigungsteil 7, welche koaxial zueinander angeordnet und entgegen der Wirkung einer Schraubendruckfeder 8 gegenseitig telekopierbar sind.

Das Sperrteil 6 weist einen rechteckigen Querschnitt auf und ist in einem Kanal 9 entsprechenden Querschnitts eines Gehäuses 10 axial verschieblich gelagert, dessen Längsachse 11 die gemeinsame Längsachse 12 der Lenkspindel 1 und des dazu koaxialen Mantelrohres 5 rechtwinklig schneidet. Das Gehäuse 10 ist auf der der Lenkspindel 1 und dem Mantelrohr 5 abgewandten Seite mit einer durch einen Deckel 13 verschlossenen Montageöffnung 14 versehen und in einem außen am Mantelrohr 5 vorgesehenen Aufnehmer 15 befestigt.

Das Betätigungsteil 7 ist als zylindrischer Bolzen ausgebildet und in einer zylindrischen Bohrung 16 des Gehäuses 10 axial verschieblich gelagert, welche sich koaxial zu dem das Sperrglied 6 aufnehmenden Kanal 9 erstreckt. Gegenüber den beiden schmalen Seitenflächen 17, 18 des Sperrteils 6 münden zwei im Gehäuse 10 ausgebildete Längsnuten 19, 20 in die Bohrung 16. In die beiden Längsnuten 19, 20 ragen zwei äußere radiale Vorsprünge 21, 22 des Betätigungsteils 7.

Das der Lenkspindel 1 abgewandte Ende 23 des Sperrteils 6 ist in einem Sackloch 24 mit einem dem rechteckigen Querschnitt des Sperrteils 6 entsprechenden Querschnitt des Betätigungsteils 7 aufgenommen und mit einem Kerbstift 25 versehen, welcher sich senkrecht zu den beiden breiten Seitenflächen 26, 27 des Sperrteils 6 erstreckt und dessen beide aus dem Sperrteil 6 ragenden Enden 28, 29 in zwei seitliche Langlöcher 30, 31 des Betätigungsteils 7 eingreifen. Im Sackloch 24 des Betätigungsteils 7 ist die Schraubendruckfeder 8 angeordnet, welche sich einerseits am Ende 23 des Sperrteils 6 und andererseits am Betätigungsteil 7 abstützt und die beiden vorstehenden Enden 28, 29 des Kerbstiftes 25 des Sperrteils 6 gegen die der Lenkspindel 1 benachbarten Enden der beiden Langlöcher 30, 31 des Betätigungsteils 7 drückt.

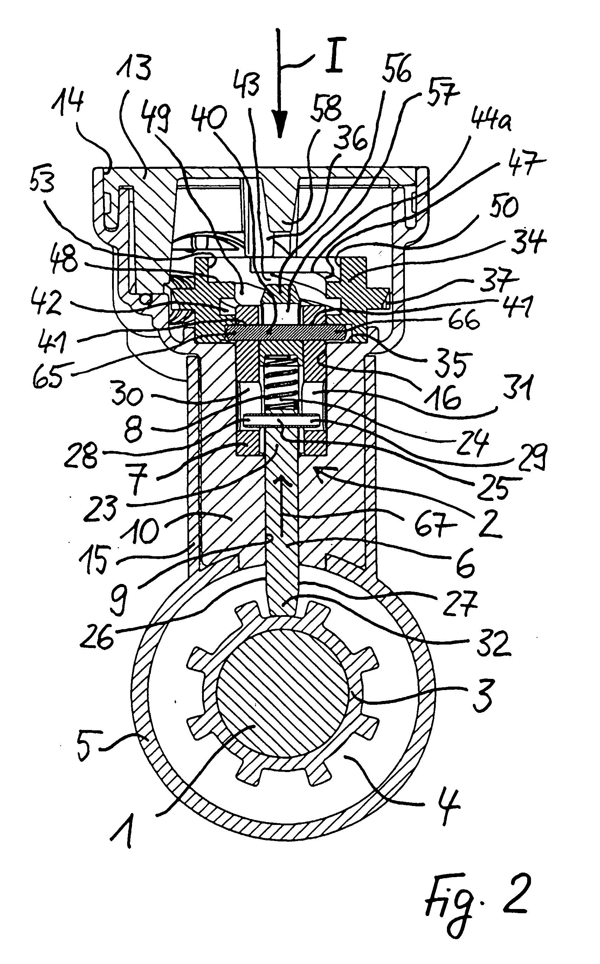

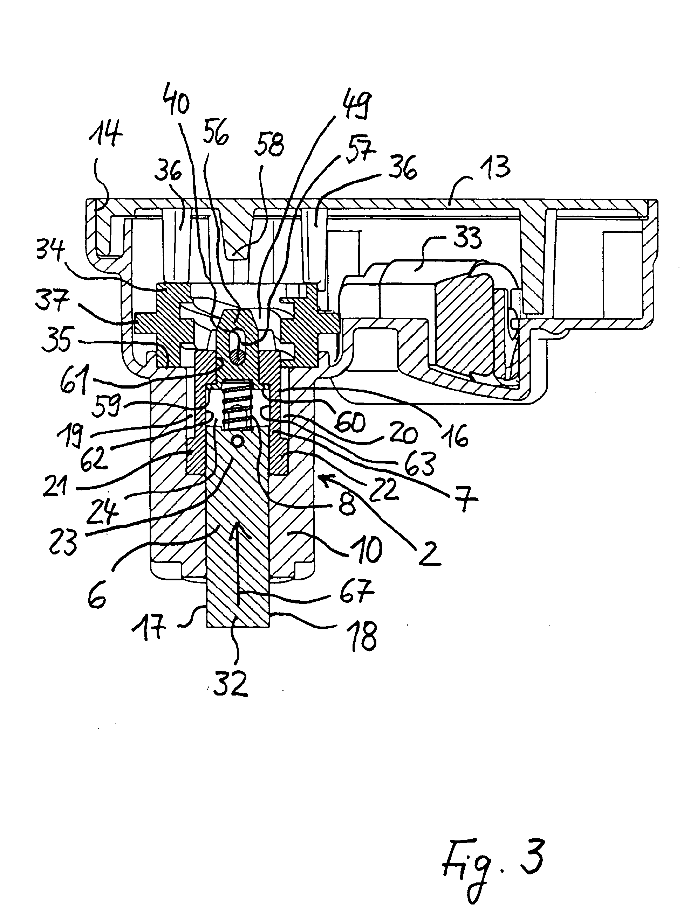

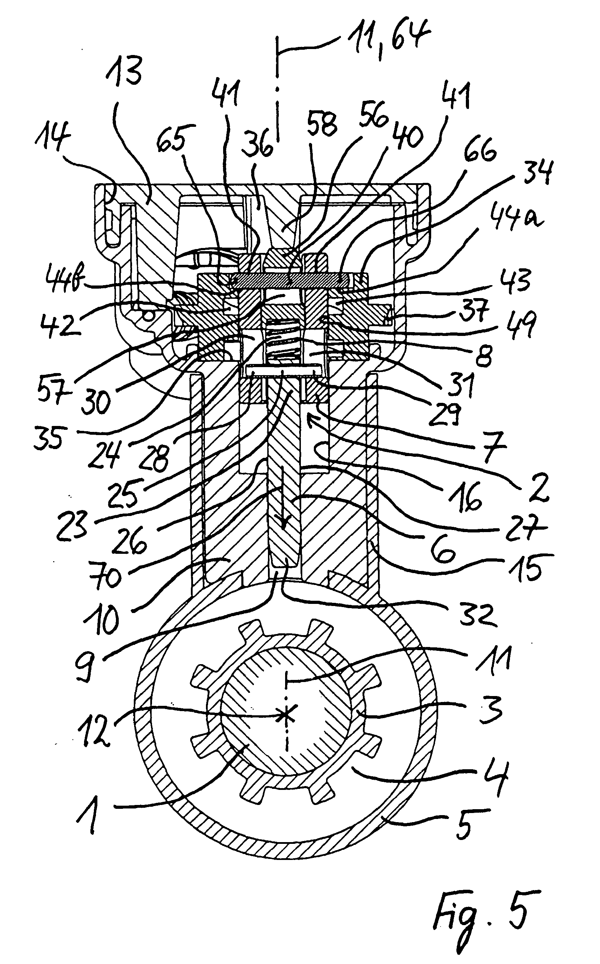

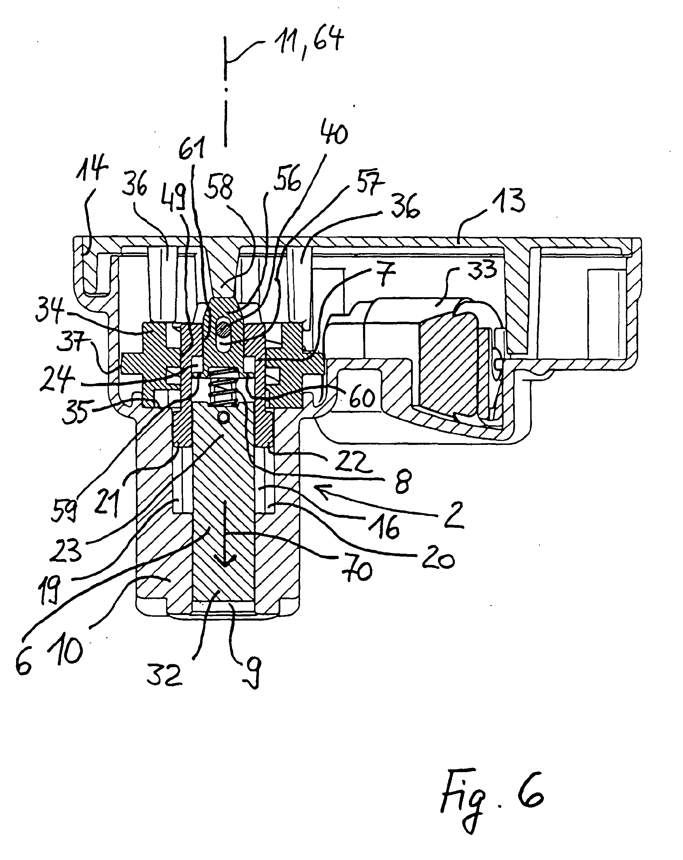

Der Sperrbolzen 2 ist im Gehäuse 10 zwischen der aus Fig. 2 und 3 ersichtlichen Sperrstellung, in welcher er mit dem der Lenkspindel 1 benachbarten Ende 32 des Sperrteils 6 in eine Sperrnut 4 der Sperrhülse 3 eingreift, so daß die Lenkspindel 1 nicht mehr gedreht werden kann, und der aus Fig. 5 und 6 ersichtlichen Freigabestellung hin- und herbewegbar, in welcher der Sperrbolzen 2 mit dem Ende 32 des Sperrteils 6 in keine Sperrnut 4 der Sperrhülse 3 eingreift und die Lenkspindel 1 freigibt, so daß sie gedreht werden kann. Das Sperrteil 6 kann gegen die Wirkung der Schraubendruckfeder 8 in das Sackloch 24 des Betätigungsteils 7 hineinlaufen, falls bei der Bewegung des Sperrbolzens 2 in die Sperrstellung keine Sperrnut 4 der Sperrhülse 3 auf das Sperrteil 6 ausgerichtet sein sollte, um dessen freies Ende 32 aufzunehmen.

Zur Axialverschiebung des Sperrbolzens 2 in die Freigabestellung und in der entgegengesetzten Richtung in die Sperrstellung bzw. des Betätigungsteils 7 in die Stellung gemäß Fig. 5 und 6 unter Mitnahme des Sperrteils 6 in die Freigabestellung und in der entgegengesetzten Richtung in die Stellung gemäß Fig. 2 und 3 unter Mitnahme des Sperrteils 6 in die Sperrstellung dient ein mittels eines Elektromotors 33 mit umkehrbarer Drehrichtung hin- und herdrehbares Steuerglied 34. Das Steuerglied 34 ist koaxial zum Betätigungsteil 7 angeordnet und umgibt das Betätigungsteil 7, ist im Gehäuse 10 um die gemeinsame Längsachse 11 des Sperrteil-Kanals 9 und der Betätigungsteil-Bohrung 16 zwischen einer zur Längsachse 11 koaxialen Ringfläche 35 des Gehäuses 10 und einem zur Längsachse 11 koaxialen Kranz von Innenvorsprüngen 36 am Verschlußdeckel 13 der Montageöffnung 14 des Gehäuses 10 drehbar gelagert und ist als Schneckenrad mit einer Außenverzahnung 37 ausgebildet, in welche eine auf der Ausgangswelle 38 des Elektromotors 33 befestigte Antriebsschnecke 39 eingreift.

Das äußere Steuerglied 34 wirkt mit einem zylindrischen Querstift 40 des inneren Betätigungsteils 7 zusammen, welcher in einer zylindrischen Querbohrung 41 des Betätigungsteils 7 axial verschieblich gelagert ist. Dazu ist das Steuerglied 34 mit zwei schraubenlinienförmig verlaufenden inneren Nuten 42, 43 und einer ebenen Endfläche versehen, welche senkrecht zur Drehachse 11 des Steuergliedes 34 orientiert ist und aus zwei Abschnitten 44a und 44b besteht, die jeweils an die eine Nut 42 bzw. an die andere Nut 43 anschließen, welche über eine Zwischenfläche 45 bzw. 46 und eine Schrägfläche 47 bzw. 48 in den Endflächenabschnitt 44a bzw. 44b übergeht. Die beiden Zwischenflächen 45 und 46 liegen in derselben zur Drehachse 11 des Steuergliedes 34 senkrechten Ebene und die beiden Schrägflächen 47 und 48 weisen jeweils dieselbe Steigung wie jede der beiden Nuten 42 und 43 auf, welche sich entlang der zylindrischen Bohrung 49 des Steuergliedes 34 erstrecken, die zur Aufnahme des Betätigungsteils 7 dient.

Die Zwischenfläche 45, die anschließende Schrägfläche 47 und der folgende Endflächenabschnitt 44a der einen Nut 42 des Steuergliedes 34 sind von einer senkrechten ersten Seitenflanke 50 begrenzt, welche vom Boden 51 dieser Nut 42 außen in einem gewissen Abstand an der anderen Nut 43 des Steuerglieds 34 vorbei bis zu dem der Schrägfläche 47 fernen Ende 52 des Endflächenabschnitts 44a verläuft. Die Zwischenfläche 46, die anschließende Schrägfläche 48 und der folgende Endflächenabschnitt 44b der anderen Nut 43 des Steuergliedes 34 sind von einer senkrechten zweiten Seitenflanke 53 begrenzt, welche vom Boden 54 dieser Nut 43 nach außen und anschließend nach innen zu der der Aufnahme des Betätigungsteils 7 dienenden Bohrung 49 des Steuergliedes 34 hin verläuft, um an der Mündung 55 der Nut 42 auf die Zwischenfläche 45 in die Bohrung 49 überzugehen.

Die Schraubendruckfeder 8, entgegen deren Wirkung das Sperrteil 6 des Sperrbolzens 2 in dessen Betätigungsteil 7 einschiebbar ist, ist am Betätigungsteil 7 über einen Stößel 56 abgestützt. Der Stößel 56 weist ein Langloch 57 auf, durch welches sich der Querstift 40 des Betätigungsteils 7 erstreckt, und ist im Betätigungsteil 7 mittels eines gehäusefesten Anschlags 58 axial verschiebbar, so daß die Schraubendruckfeder 8 in der Freigabestellung des Sperrbolzens 2 den Querstift 40 des Betätigungsteils 7 gegen die Endfläche (Endflächenabschnitte 44a und 44b) des Steuergliedes 34 drückt.

Der Stößel 56 ist zur Übertragung der Kraft der Schraubendruckfeder 8 auf das Betätigungsteil 7 mit zwei seitlichen Vorsprüngen 59 und 60 versehen, welche am Betätigungsteil 7 anliegen. Solange der Stößel 56 nicht am gehäusefesten Anschlag 58 anliegt, stützt der Stößel 56 sich mit den Vorsprüngen 59 und 60 am Betätigungsteil 7 ab, ohne dessen Querstift 40 zu berühren, so daß dieser nicht durch die Schraubendruckfeder 8 belastet wird und entsprechend leicht in der Querbohrung 41 des Betätigungsteils 7 und im Langloch 57 des Stößels 56 axial verschoben werden kann.

Der Stößel 56 ist zylindrisch ausgebildet und in einer zylindrischen Bohrung 61 des Betätigungsteils 7 axial verschieblich gelagert, welche in das Sackloch 24 mündet, das im Betätigungsteil 7 zur Aufnahme des Sperrteils 6 vorgesehen ist. Die beiden Vorsprünge 59 und 60 des Stößels 56 stehen von demselben auf einander diametral gegenüberliegenden Seiten radial zu den beiden schmalen Seitenflächen 62 und 63 des Sacklochs 24 hin ab und weisen zusammen mit dem Stößel 56 einen rechteckigen Umriß auf, welcher dem rechteckigen Querschnitt das Sackloch 24 entspricht. Dadurch erleichtern die Vorsprünge 59 und 60 den Einbau des Querstiftes 40 des Betätigungsteils 7, weil sie so sicher stellen, daß das Langloch 57 des Stößels 56 auf die Querbohrung 41 des Betätigungsteils 7 ausgerichtet ist, so daß der Querstift 40 ohne weiteres durch das Langloch 57 hindurch in die Querbohrung 41 eingesteckt werden kann.

Der Stößel 56 besteht aus einem solchen Material, welches überhaupt kein Geräusch oder nur ein schwaches Geräusch beim Auftreffen des Stößels 56 auf den gehäusefesten Anschlag 58 entstehen läßt. Vorzugsweise ist der Stößel 56 aus einem dazu geeigneten Kunststoff hergestellt. Allerdings ist es auch möglich, für den gehäusefesten Anschlag 58 oder für den Stößel 56 und den gehäusefesten Anschlag 58 einen solchen Werkstoff vorzusehen.

Der gehäusefeste Anschlag 58 liegt dem Stößel 56 des Betätigungsteils 7 des Sperrbolzens 2 gegenüber und ist innen am Verschlußdeckel 13 der Montageöffnung 14 des Gehäuses 10 angeordnet. Die gemeinsame Längsachse 64 des Anschlags 58 und des Stößels 56 fällt mit der gemeinsamen Längsachse 11 des Sperrteil-Kanals 9 und der Betätigungsteil-Bohrung 16 zusammen, um welche sich das Steuerglied 34 dreht.

Die geschilderte Vorrichtung funktioniert folgendermaßen.

Wenn das Sperrteil 6 sich in der Sperrstellung befindet, dann liegt das Betätigungsteil 7 mit seiner das Sperrteil 6 umgebenden Stirnfläche am Boden der Bohrung 16 des Gehäuses 10 an, in welcher das Betätigungsteil 7 angeordnet ist, wobei der Querstift 40 des Betätigungsteils 7 bzw. die beiden Enden 65 und 66 des Querstiftes 40, welche aus der Querbohrung 41 des Betätigungsteils 7 hervorragen, sich neben der Ringfläche 35 des Gehäuses 10 erstreckt bzw. erstrecken, an welcher das Steuerglied 34 anliegt. Die Schraubendruckfeder 8 drückt einerseits das freie Ende 32 des Sperrteils 6 in eine Sperrnut 4 der Sperrhülse 3 der Lenkspindel 1, so daß die beiden aus dem Sperrteil 6 vorstehenden Enden 28, 29 des Kerbstiftes 25 die der Lenkspindel 1 benachbarten Enden der Langlöcher 30, 31 des Betätigungsteils 7 nicht berühren, und andererseits über den Stößel 56 und das Betätigungsteil 7 dessen Querstift 40 gegen das Steuerglied 34.

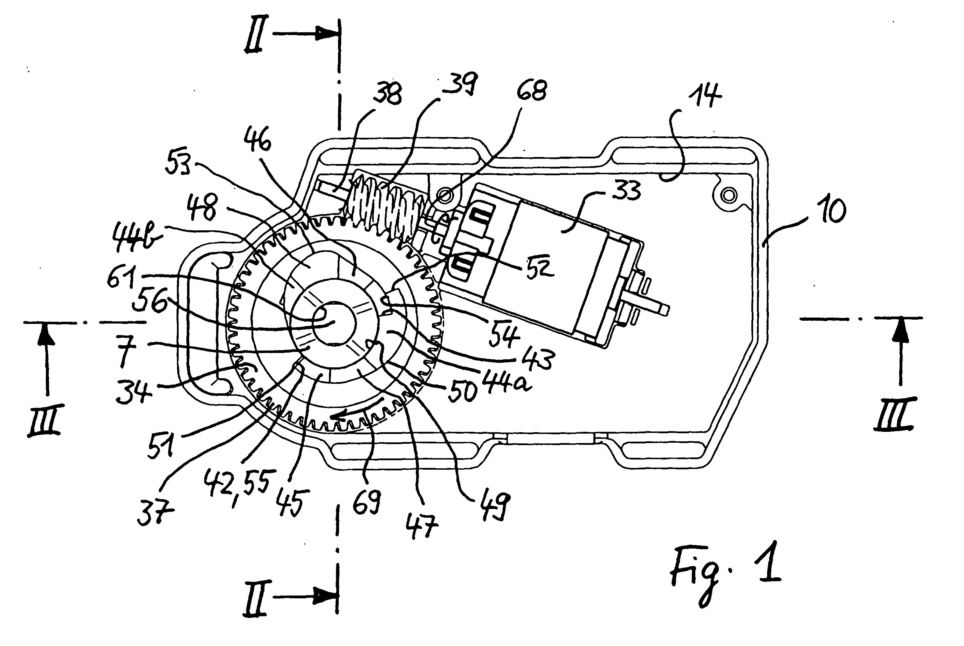

Um das Sperrteil 6 aus der Sperrstellung und das Betätigungsteil 7 aus der erläuterten Axialstellung in Richtung des Pfeils 67 in Fig. 2 und 3 axial in die Freigabestellung bzw. in die entsprechende Axialstellung gemäß Fig. 5 und 6 zu verschieben, wird der Elektromotor 33 eingeschaltet, so daß er die Antriebsschnecke 39 in Richtung des Pfeils 68 und das Steuerglied 34 in Richtung des Pfeils 69 in Fig. 1 dreht. Dieses hat zur Folge, daß die beiden aus der Querbohrung 41 vorstehenden Enden 65 und 66 des Querstiftes 40 des Betätigungsteils 7 in die beiden schraubenlinienförmig verlaufenden Nuten 42 und 43 des Steuergliedes 34 eintreten, um in den Nuten 42 und 43 zu deren Zwischenflächen 45 und 46 zu laufen und dann an den Zwischenflächen 45 und 46 sowie an den anschließenden Schrägflächen 47 und 48 entlang zu den Endflächenabschnitten 44a und 44b der Nuten 42 und 43 hin zu gleiten. Sobald dabei der Stößel 56 am gehäusefesten Anschlag 58 zur Anlage kommt, wird er in die Bohrung 61 des Betätigungsteils 7 hineingeschoben, um die Schraubendruckfeder 8 zu komprimieren. In derjenigen Drehstellung des Steuergliedes 34, in welcher die Enden 65 und 66 des Querstiftes 40 auf die Endflächenabschnitte 44a und 44b übergehen, hat das Betätigungsteil 7 diejenige Axialstellung erreicht, in welcher das Sperrteil 6 die Freigabestellung einnimmt. Dann drückt die über den Stößel 56 am gehäusefesten Anschlag 58 abgestützte Schraubendruckfeder 8 über das Sperrteil 6, dessen Kerbstift 25 und das Betätigungsteil 7 dessen Querstift 40 gegen die Endflächenabschnitte 44a und 44b des Steuergliedes 34, wie in Fig. 5 besonders deutlich zeigt.

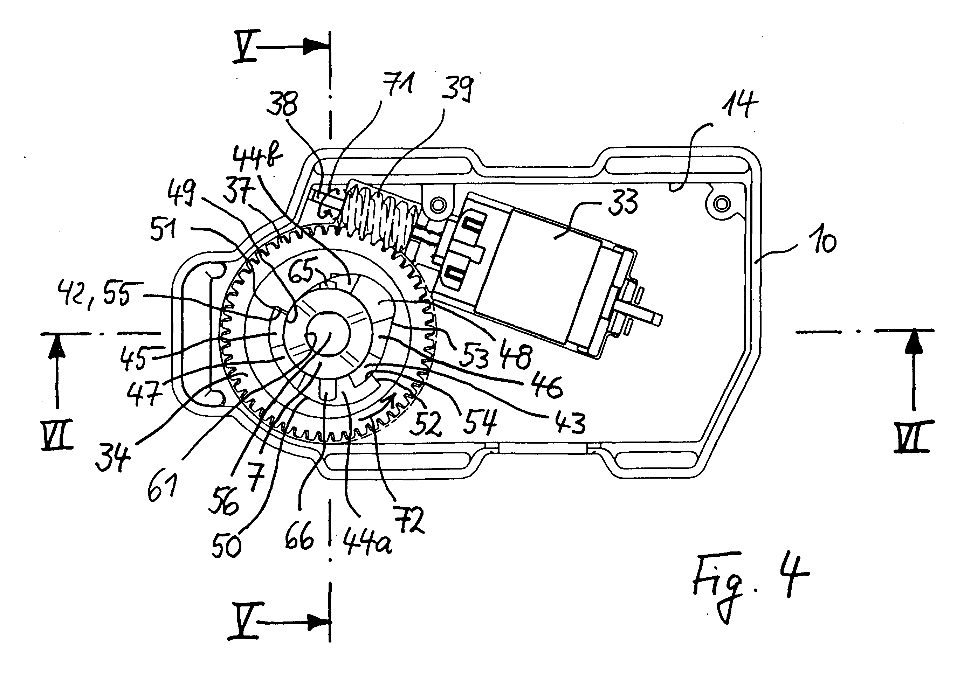

Um das Sperrteil 6 aus der Freigabestellung und das Betätigungsteil 7 aus der besagten Axialstellung in Richtung des Pfeils 70 in Fig. 5 und 6 axial in die Sperrstellung bzw. in die entsprechende Axialstellung gemäß Fig. 2 und 3 zu verschieben, wird der Elektromotor 33 eingeschaltet, so daß er die Antriebsschnecke 39 in Richtung des Pfeils 71 und das Steuerglied 34 in Richtung des Pfeils 72 in Fig. 4 dreht. Dieses hat zur Folge, daß die beiden aus der Querbohrung 41 des Betätigungsteils 7 vorstehenden Enden 65 und 66 des Querstiftes 40 des Betätigungsteils 7 unter der Wirkung der Schraubendruckfeder 8 von den beiden Endflächenabschnitten 44a und 44b über die beiden Schrägflächen 47 und 48 und die beiden Zwischenflächen 45 und 46 in die beiden schraubenlinienförmig verlaufenden Nuten 42 und 43 des Steuergliedes 34 eingeführt werden, um in den Nuten 42 und 43 zur Ringfläche 35 des Gehäuses 10 zu laufen.

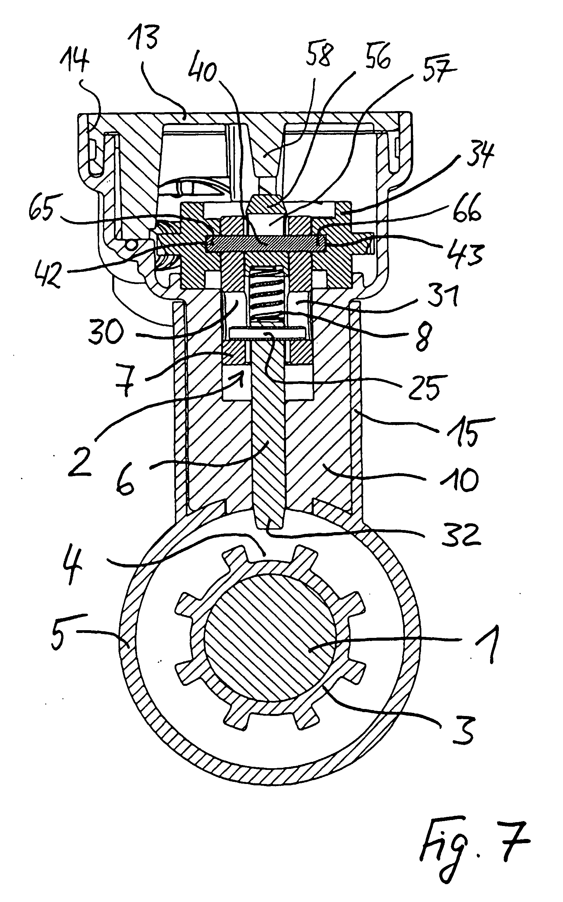

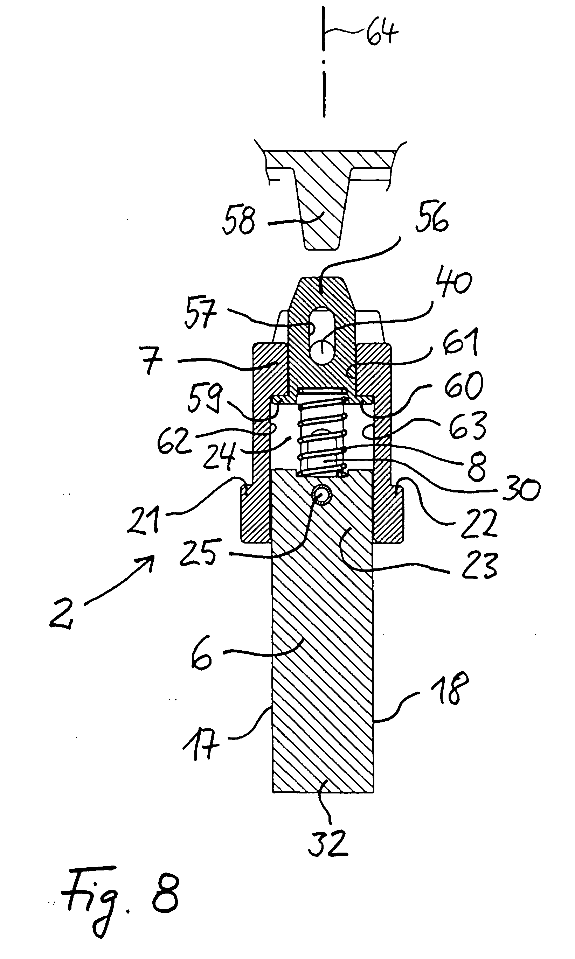

Fig. 7 und 8 lassen den Zustand des Sperrbolzens 2 in einer Zwischenstellung erkennen, welche zwischen der Sperrstellung gemäß Fig. 2 und 3 und der Freigabestellung gemäß Fig. 5 und 6 vorliegt und in welcher die beiden nach außen ragenden Enden 65 und 66 des Querstiftes 40 des Betätigungsteils 7 in den beiden schraubenlinienförmig verlaufenden inneren Nuten 42 und 43 des Steuergliedes 34 aufgenommen sind.

## Patentansprüche

1. Vorrichtung zum Sperren der Lenkspindel (1) eines Kraftfahrzeugs gegen Drehen mittels eines in einem Gehäuse (10) über ein hin- und herdrehbares Steuerglied (34) zwischen einer Sperrstellung und einer Freigabestellung axial hin- und herbewegbaren Sperrbolzens (2), welcher aus einem Sperrteil (6) und einem Betätigungsteil (7) besteht, wobei das Steuerglied (34) das Betätigungsteil (7) umschließt und zwei schraubenlinienförmig verlaufende innere Nuten (42,43) sowie eine an die Nuten anschließende, ebene und zur Drehachse (11) des Steuergliedes (34) senkrechte Endfläche (44a,44b) aufweist, womit ein in einer Querbohrung (41) des Betätigungsteils (7) axial verschieblicher Querstift (40) zusammenwirkt, und wobei das Sperrteil (6) entgegen der Wirkung einer Schraubendruckfeder (8) in das Betätigungsteil (7) einschiebbar ist, **dadurch gekennzeichnet, daß** die Schraubendruckfeder (8) am Betätigungsteil (7) über einen Stößel (56) abgestützt ist, welcher ein vom Querstift (40) des Betätigungsteils (7) durchsetztes Langloch (57) aufweist und im Betätigungsteil (7) mittels eines gehäusefesten Anschlags (58) axial verschiebbar ist, so daß die Schraubendruckfeder (8) in der Freigabestellung des Sperrbolzens (2) über das Sperrteil (6) und das Betätigungsteil (7) dessen Querstift (40) gegen die Endfläche (44a,44b) des Steuergliedes (34) drückt.

2. Vorrichtung nach Anspruch 1, **dadurch gekennzeichnet, daß** der Stößel (56) zur Übertragung der Kraft der Schraubendruckfeder (8) auf das Betätigungsteil (7) mit zwei seitlichen Vorsprüngen (59,60) versehen ist, welche am Betätigungsteil (7) anliegen.

3. Vorrichtung nach Anspruch 2, **dadurch gekennzeichnet, daß** der Stößel (56) zylindrisch ausgebildet und in einer zylindrischen Bohrung (61) des Betätigungsteils (7) axial verschieblich gelagert ist, welche in ein Sackloch (24) mit rechteckigem Querschnitt mündet, das im Betätigungsteil (7) zur Aufnahme des mit einem entsprechenden rechteckigen Querschnitt versehenen Sperrteils (6) und der beiden vom Stößel (56) radial abstehenden, zusammen mit dem Stößel (56) einen entsprechenden rechteckigen Umriß aufweisenden Vorsprünge (59,60) vorgesehen ist.

4. Vorrichtung nach Anspruch 1, 2 oder 3, **dadurch gekennzeichnet, daß** der Stößel (56) oder der gehäusefeste Anschlag (58) oder sowohl der Stößel (56) als auch der gehäusefeste Anschlag (58) aus einem solchen Material besteht, welches überhaupt keine oder nur eine geringe Geräuschentwicklung beim Auftreffen des Stößels (56) auf den Anschlag (58) bewirkt.

5. Vorrichtung nach Anspruch 4, **dadurch gekennzeichnet, daß** der Stößel (56) oder der gehäusefeste Anschlag (58) oder sowohl der Stößel (56) als auch der gehäusefeste Anschlag (58) aus einem geeigneten Kunststoff besteht.

6. Vorrichtung nach einem der vorstehenden Ansprüche, **dadurch gekennzeichnet, daß** der gehäusefeste Anschlag (58) am Verschlußdeckel (13) einer Montageöffnung (14) des Gehäuses (10) vorgesehen ist.

## Claims

1. Device for blocking the steering shaft (1) of a motor vehicle against rotation by means of a locking bolt (2), which is movable axially back and forth between a locked position and a released position in a housing (10) via a control member (34) that can be rotated back and forth, which locking bolt comprises a locking element (6) and an actuating element (7), wherein the control member (34) surrounds the actuating element (7) and has two helically extending interior grooves (42, 43) as well as a plane end surface (44a, 44b), adjoining the grooves and perpendicular to the axis of rotation (11) of the control member (34), with which grooves and end surface a transverse pin (40) that is axially displaceable in a transverse bore (41) of the actuating element (7) cooperates, and wherein the locking element (6) is adapted to be pushed into the actuating element (7) against the action of a helical compression spring (8), **characterized in that** the helical compression spring (8) is supported on the actuating element (7) via a plunger (56), said plunger having an oblong hole (57) through which the transverse pin (40) of the actuating element (7) extends, and said plunger being axially displaceable in the actuating element (7) by means of a stop (58) fixed to the housing, so that the helical compression spring (8), in the released position of the locking bolt (2), presses the transverse pin of the actuating element, via the locking element (6) and the actuating element (7), against the end surface (44a, 44b) of the control member (34).

2. Device according to claim 1, **characterized in that** the plunger (56), for transmitting the force of the helical compression spring (8) to the actuating element (7), is provided with two lateral protrusions (59, 60), which contact the actuating element (7).

3. Device according to claim 2, **characterized in that** the plunger (56) is formed cylindrically and is axially displaceably supported in a cylindrical bore (61) of the actuating element (7), which bore opens into a blind bore (24) of rectangular cross section, provided in the actuating element (7), for receiving both the locking element (6), which is provided with a corresponding rectangular cross section, and the two protrusions (59, 60), protruding radially from the plunger (56), which together with the plunger (56) have a corresponding rectangular outline.

4. Device according to claim 1, 2 or 3, **characterized in that** the plunger (56) or the stop (58) fixed to the housing consists, or both the plunger (56) and the stop (58) fixed to the housing, consist of a material such that no noise whatever, or only little noise, develops when the plunger (56) strikes the stop (58).

5. Device according to claim 4, **characterized in that** the plunger (56) or the stop (58) fixed to the housing, or both the plunger (56) and the stop (58) fixed to the housing, consists/consist of a suitable plastic.

6. Device according to any one of the foregoing claims, **characterized in that** the stop (58) fixed to the housing is provided on the closure cap (13) of an assembly opening (14) of the housing (10).

## Revendications

1. Dispositif pour empêcher la rotation de l'arbre de direction (1) d'un véhicule automobile au moyen d'un goujon de verrouillage (2) qui peut être déplacé dans un boîtier (10) en va-et-vient dans le sens axial entre une position de verrouillage et une position de déverrouillage à l'aide d'un organe de commande (34) pouvant être tourné en va-et-vient et qui se compose d'un élément de verrouillage (6) et d'un élément d'actionnement (7), dans lequel l'organe de commande (34) entoure l'élément d'actionnement (7) et possède deux gorges intérieures (42, 43) en spirale et une surface d'extrémité (44a, 44b) plane, faisant suite aux gorges et perpendiculaire à l'axe de rotation (11) de l'organe de commande (34), avec lesquelles coopère une goupille transversale (40) mobile dans le sens axial dans un alésage transversal (41) de l'élément d'actionnement (7), et dans lequel l'élément de verrouillage (6) peut être poussé dans l'élément d'actionnement (7) contre l'action d'un ressort hélicoïdal de compression (8), **caractérisé en ce que** le ressort hélicoïdal de compression (8) est en appui sur l'élément d'actionnement (7) à l'aide d'un poussoir (56) qui possède un trou allongé (57) traversé par la goupille transversale (40) de l'élément d'actionnement (7) et qui peut être déplacé dans le sens axial dans l'élément d'actionnement (7) au moyen d'une butée (58) solidaire du boîtier, de sorte que le ressort hélicoïdal de compression (8), dans la position de déverrouillage du goujon de verrouillage (2), presse, par l'intermédiaire de l'élément de verrouillage (6) et de l'élément d'actionnement (7), la goupille transversale (40) de celle-ci contre la surface d'extrémité (44a, 44b) de l'organe de commande (34).

2. Dispositif selon la revendication 1, **caractérisé en ce que** le poussoir (56) est doté, pour transmettre la force du ressort hélicoïdal de compression (8) à l'élément d'actionnement (7), de deux saillies latérales (59, 60) qui reposent sur l'élément d'actionnement (7).

3. Dispositif selon la revendication 2, **caractérisé en ce que** le poussoir (56) est de forme cylindrique et est supporté avec possibilité de translation axiale dans un alésage cylindrique (61) de l'élément d'actionnement (7) qui débouche dans un trou borgne (24) de section rectangulaire prévu dans l'élément d'actionnement (7) pour recevoir l'élément de verrouillage (6) ayant une section rectangulaire correspondante et les deux saillies (59, 60) dépassant dans le sens radial du poussoir (56) et possédant avec le poussoir (56) un contour rectangulaire correspondant.

4. Dispositif selon la revendication 1, 2 ou 3, **caractérisé en ce que** le poussoir (56) ou la butée (58) solidaire du boîtier ou à la fois le poussoir (56) et la butée (58) solidaire du boîtier sont faits d'un matériau qui ne produit absolument pas ou très peu de bruit lorsque le poussoir (56) atteint la butée (58).

5. Dispositif selon la revendication 4, **caractérisé en ce que** le poussoir (56), ou la butée (58) solidaire du boîtier, ou à la fois le poussoir (56) et la butée (58) solidaire du boîtier, sont faits d'une matière plastique appropriée.

6. Dispositif selon l'une quelconque des revendications précédentes, **caractérisé en ce que** la butée (58) solidaire du boîtier est prévue sur le couvercle de fermeture (13) d'une ouverture de montage (14) du boîtier (10).
